# EUROPÄISCHE PATENTANMELDUNG

(11) **EP 1 162 477 A1**
(43) Veröffentlichungstag der Anmeldung: **12.12.2001**
(21) Anmeldenummer: 00890184.5
(22) Anmeldetag: 06.06.2000
(51) Int. Cl.: G01S 15/89, G01S 7/52

(54) **Verfahren zur Untersuchung von bewegten Objekten mit Ultraschall**

(71) Anmelder: Kretztechnik Aktiengesellschaft, 4871 Zipf (AT)
(72) Erfinder: Wiesauer, Franz, Dipl.-Ing., A-4871 Zipf (AT)
(74) Vertreter: Hübscher, Gerhard, Dipl.-Ing.

(57) **Zusammenfassung**

Bei einem Verfahren zur Darstellung von Bewegungsabläufen bei der Untersuchung von bewegten Objekten mit Ultraschall, wird das Objekt mit einer nur auf eine Schnittebene eingestellten Ultraschall-Schnittbildeinheit (1) abgetastet.

Die aus aufeinanderfolgenden Schnittbildabtastungen gewonnenen Signale werden in einem Speicher (3) zu einem virtuellen, dreidimensionalen Datenblock umgewandelt, bei dem sich die dritte Dimension aus einem vorgegebenen oder wählbaren Zeitabstand zwischen aufeinanderfolgend aufgenommenen Schnittbildern ergibt. Aus dem gespeicherten Datenblock werden über eine oder mehrere Abfrageeinheiten (4, 5) und nach einstellbaren Kriterien, nämlich Schnittflächen oder Schnittachsen durch diesen Datenquader oder nach Signalkriterien Daten abgefragt und auf wenigstens einer Anzeigeeinheit (7) in Form von Schnittbildern, (8) Bewegungskurven (11, 12), einen räumlichen Eindruck erweckenden, gegebenenfalls höhen- oder tiefenversetzten bzw. axonometrisch dargestellten Kurvenscharen (13) oder als einen dreidimensionalen Eindruck bewirkende Bilder dargestellt.

## Beschreibung

Die Erfindung bezieht sich auf ein Verfahren nach dem Oberbegriff des Patentanspruches 1.

An sich sind in der Technik verschiedene Verfahren zur Ultraschalluntersuchung und zur Darstellung der aus den Untersuchungen gewonnenen Signale auf Anzeigeeinheiten, insbesondere Bildschirmen, bekannt. Für die Darstellung von Bewegungsabläufen ist die sogenannte M-Bildtechnik das einfachste Verfahren. Hier wird das zu untersuchende Objekt wie bei A-Bild-Aufnahmen unbewegter Gegenstände mit einem Schallstrahl abgetastet und die vom bewegten Objekt erhaltenen Echos werden als zeitabhängige Kurven dargestellt. Bei Herzuntersuchungen ist diese Technik auch unter der Bezeichnung _{"}Ultraschallkardiogramm (UkG)" bekannt. Es wird in einer Kurve die jeweilige Bewegung angezeigt, wobei man durch Zeitblenden zwischen Darstellungen der Herzoberfläche und Darstellungen der Herzklappenbewegung unterscheiden kann. Ergänzend dazu kann durch Verarbeitung der Echosignale etwa über Tiefpaßfilter oder Operationsverstärker auch eine akustische Anzeige z. B. der Herzklappengeräusche gewonnen werden.

Bei einer normalen einfachen Schnittbilddarstellung kann bei entsprechend hoher Frequenz der einzelnen Abtastzyklen die Bewegung des Objektes unmittelbar am Bildschirm beobachtet werden. Dabei ist auch eine Speicherung einer Serie von zeitlich aufeinanderfolgend aufgenommenen Schnittbildern bekannt. Die automatische Wiedergabe dieser Bildserie wird auch als Film-Modus bezeichnet. Dabei werden in einem längeren Abtastvorgang immer die zuletzt aufgenommenen Schnittbilder in einem Speicher gehalten, so daß nach Beendigung des Abtastvorganges diese zuletzt aufgenommenen Bilder nacheinander oder auch in beliebiger Weise einzeln und nacheinander für die Darstellung abrufbar sind. Jedes auch unter der Bezeichnung _{"}B-Bild" bekannte Einzelbild stellt aber nur eine Momentaufnahme dar, so daß - ebenso wie bei der Beobachtung eines bewegten Schnittbildes - die Genauigkeit einer Diagnose vom Können und der Beobachtungsgabe des Untersuchenden abhängt.

Schließlich ist es bekannt, ganze Volumsbereiche eines zu untersuchenden Objektes mit Hilfe einer sogenannten 3D-Ultraschallsonde abzutasten, die gewonnenen Signale lagerichtig in einem 3D-Speicher zu speichern und dann wahlweise aus den gespeicherten Daten nach beliebigen Schnittebenen Schnittbilder durch das jeweilige Objekt zu konstruieren, wie dies z. B. in der AT 358 155 B beschrieben ist. Ferner kann man durch Auswahl bestimmter Reflexionsbereiche unter Verwendung einer entsprechenden Auswertungslogik auch dreidimensionale Bilder des untersuchten Objektes oder von Bereichen des untersuchten Objektes abrufen und darstellen, wobei auch die Möglichkeit besteht, unter Verwendung einer weiteren Logik das Objekt in der Darstellung zu drehen oder sonst in seiner Lage zu verändern. Der im 3D-Speicher aufgezeichnete Datenblock ist hier tatsächlich dreidimensional durch die Relativlage der nacheinander durch verschiedene Bereiche des Objektes geführten B-Bilder definiert, wobei jedes B-Bild einen anderen Bereich des Objektes erfaßt hat.

Aufgabe der Erfindung ist es, ein neues Verfahren anzugeben, mit dessen Hilfe Bewegungsabläufe und in der Diagnose insbesondere die Änderung von Bewegungsabläufen bewegter Objekte in übersichtlicher und verständlicher Weise erfaßt und dargestellt werden können.

Die gestellte Aufgabe wird durch die im Patentanspruch 1 gegebenen Verfahrensschritte gelöst.

Wie beim M-Modeverfahren wird der Schallkopf, der die abgetasteten Schallwellen aussendet und die reflektierenden Echosignale empfängt, in bezug zum Objekt nicht verändert. Es wird aber unter Verwendung einer sogenannten B-Bildmechanik oder auch eines Vielelementenschallkopfes nicht nur eine Ultraschallinie, sondern ein komplettes, einem B-Bild entsprechendes Schnittbild erhalten. Aus den nacheinander aus dem gleichen Objektbereich gewonnenen Schnittbilder wird aber der dreidimensionale Datenblock gewonnen, bei dem die dritte Dimension nicht wie bei der bekannten 3D-Abtastung durch die Verstellung des Schallkopfes quer zur Abtastebene, sondern durch die Zeit zwischen zwei aus dem gleichen Bereich stammenden B-Bildern bestimmt wird. Jedes einzelne Schnittbild stellt das Objekt zu einer anderen Zeit dar. Aus dem Datenblock können nun nach beliebig gewählten Schnittebenen Schnittbilddarstellungen abgeleitet werden, wie sie aus dem B-Bild selbst nicht ersichtlich sind. Es wird hier u. a. auch auf die in der eingangs genannten AT 358 155 B angegebenen Möglichkeiten verwiesen, wobei aber immer in Betracht zu ziehen ist, daß die dritte Dimension der Speicherung eine in eine Raumkoordiante umgewandelte Zeitkoordinate ist. Die Verlagerung eines Punktes des untersuchten Objektes in der Aufnahmezeit läßt sich ebenfalls darstellen und ergibt ein dem M-Mode entsprechendes Kurvenbild, z. B. bei Herzuntersuchungen eine UkG-Ableitung durch den entsprechenden Herzbereich. Wählt man aus den einzelnen B-Bildern eine Oberflächenlinie, z. B. die Oberflächenkontur einer Herzklappe, aus und stellt deren Bewegung in aufeinanderfolgenden Kurvenscharen dar, so erhält man eine dreidimensionale Darstellung, in der leicht Abweichungen des Bewegungsablaufes durch Einsattelungen oder Spitzen in dem räumlich erscheinenden Gebirge vom Beobachter erfaßt werden können, wobei der Beobachter dann jenes Schnittbild untersuchen wird, in dem die Abweichung aufgetreten ist.

Bei der weiteren Realisierung des erfindungsgemäßen Verfahrens können in der Ultraschalltechnik teilweise bekannte zusätzliche Maßnahmen gesetzt werden, um die Darstellungen zu verbessern oder zu erleichtern. Etwa wird die Klarheit der Darstellung verbessert, wenn nach Anspruch 2 vorgegangen wird. Dabei können auch Speichervolumen, Speicherzeiten und Abfragezeiten eingespart werden.

Ein für den praktischen Gebrauch durch den Arzt besonders geeignetes Verfahren ist im Anspruch 3 angegeben. Dabei wird im dargestellten normalen B-Bild die Lage der virtuellen Schnittebenen bzw. Abtaststrahlen für eine UkG-Darstellung usw. durch Markierungen angegeben, wobei der Arzt auch die Möglichkeit hat, das normale B-Bild für jenen Zeitpunkt abzurufen, in dem eine Unregelmäßigkeit aufgetreten ist. Weitere Darstellungsmöglichkeiten sind in den Ansprüchen 4 und 5 angegeben.

Weitere Einzelheiten und Vorteile des Erfindungsgegenstandes entnimmt man der nachfolgenden Zeichnungsbeschrreibung. In der Zeichnung ist der Erfindungsgegenstand beispielsweise veranschaulicht. Es zeigen
- Fig. 1: ein vereinfachtes Blockschaltschema einer bei der Durchführung des erfindungsgemäßen Verfahrens verwendeten Untersuchungseinrichtung,
- Fig. 2: zur näheren Erläuterung einer möglichen Darstellungsart eine in Form einer dreidimensionalen Abbildung aus Kurvenscharen erhaltene Darstellung der Bewe gungsabläufe einer Herzklappe über eine Reihe von Herzzyklen, wobei jeweils eine durchgehende Linie die Herzklappenbewegung in einer bestimmten Zeit und die nächsten etwa parallelen Linien die Bewegungen in den folgenden Zeiten veranschaulichen, und
- Fig. 3: im Schema eine mögliche Darstellung des Ergebnisses einer Ultraschalluntersuchung nach dem erfindungsgemäßen Verfahren auf dem Bildschrim.

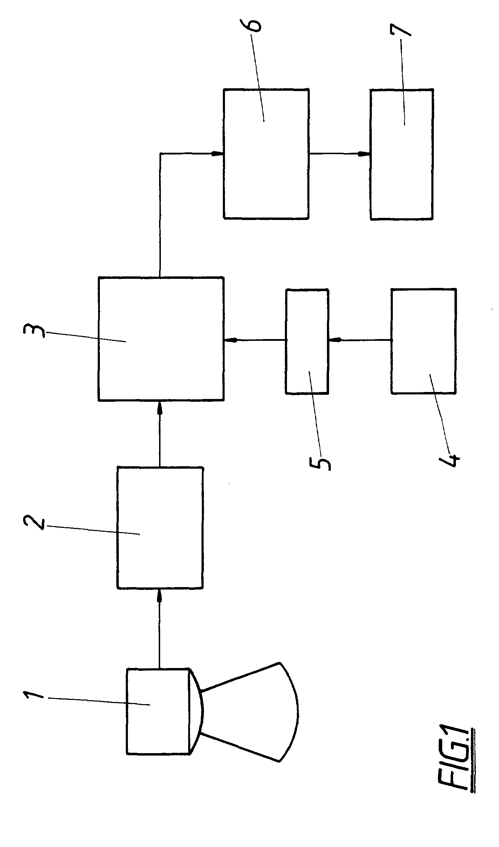

Nach Fig. 1 ist eine für die Erzeugung eines B-Bildes geeignete Abtasteinheit 1 mit einem Sender.-Empfänger 2 verbunden. An diesen Sender-Empfänger 2 schließt ein 3D-Speicher an, in dem die einzelnen zeitlich aufeinanderfolgenden B-Bilder bzw. die zu ihrem Aufbau dienenden Signale oder auch ausgewählte Signale aus diesen B-Bildern der zeitlichen Aufeinanderfolge entsprechend adressierbar gespeichert werden. Für die Abfrage des Speichers zur späteren Darstellung ist eine Adressiereinheit 4 vorgesehen, die beliebige räumliche Koordinaten, z. B. Schnittebenen oder Schnittflächen durch das gespeicherte virtuelle 3D-Volumen, Durchdringungslinien usw. berechnen kann bzw. über eine Programmiereinheit auf entsprechende Berechnungen eingestellt wird. Eine nachgeordnete Segmentiereinheit 5 erlaubt es, für die Visualisierung störende Echosignale zu entfernen, wobei hier wieder eine automatische Segmentierung oder auch eine manuelle Einstellung der Segmentiereinheit 5 möglich sind. Die von 4, 5 aus dem Speicher 3 ausgelesenen Daten werden einer Datenverarbeitungseinheit 6 zugeführt, welche die adressierten Signale auswertet und einer Anzeigeeinheit 7 zur Darstellung zuführt. Die Adressiereinheit 4 muß in der Lage sein, die Zeitkoordinate unter der erfindungsgemäßen Annahme einer Verschiebungsgeschwindigkeit des an sich stationär bleibenden, aber verschiedene Bewegungsphasen des Objektes erfassenden B-Bildes, die Zeit- bzw. Geschwindigkeitskonstante in eine Raumkoordinate umzuwandeln. Aufgrund der Aufnahmesituation ist es möglich, daß Echostrukturen bzw. deren Signale in Datenquader abgespeichert sind, die die Visualisierung der Bewegung der interessierenden Teile des Objektes stören könnten. Soll z. B. die Bewegung einer Herzklappe als Oberfläche dargestellt werden, dann beeinflussen Herzstrukturen, die in Visualisierungsrichtung vor der Herzklappe liegen, die Darstellung der Klappe selbst. Über die Segmentierungseinheit 5 werden solche ungewünschten Echostrukturen aus dem Visualisierungsprozeß ausgeschlossen. Bei manuellen Verfahren markiert der Anwender die auszuschließenden Bereiche. Es sind aber auch automatische Verfahren möglich, die z. B. die Oberfläche des gewünschten Objektes bzw. Objektbereiches markieren und damit die davor liegenden Echostrukturen von der Visualisierung ausschließen.

Die Datenverarbeitungseinheit 6 berechnet aus einer Serie von Echos entlang eines Abtaststrahles einen Bildpunkt des Bildes, was dem Betrachter einen dreidimensionalen Eindruck eines Objektes vermitteln soll.

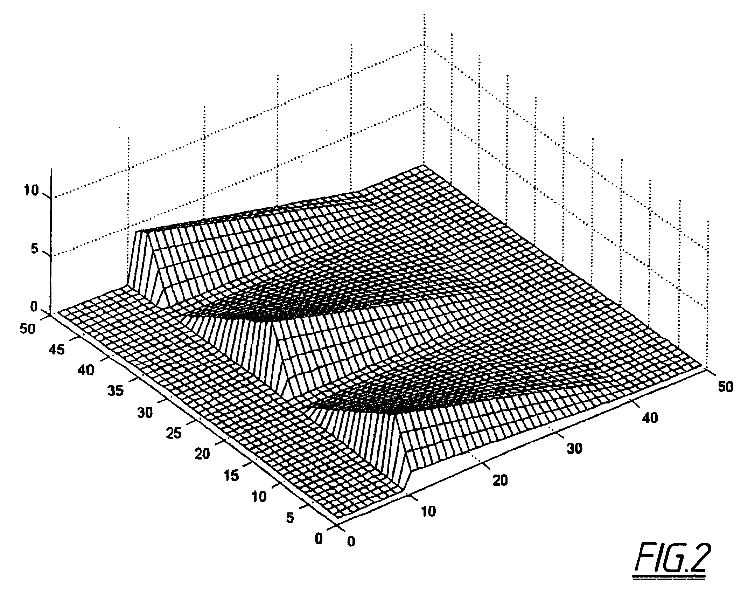

Fig. 2 zeigt in diesem Zusammenhang in vereinfachter Darstellungsweise die Bewegung einer Herzklappe, die von der Ruhestellung ausgehend schnell öffnet, langsamer schließt und in der Ruhestellung bleibt, bis der nächste Herzzyklus startet, wobei sich die Kurven aus den einzelnen B-Bildern zu dem dargestellten Gebirge während des Speicherzeitraumes ergänzen und Formänderungen im Verlauf dieser Gebirgszüge Rückschlüsse auf Fehlfunktionen zulassen bzw. zu weiteren Untersuchungen Anlaß geben werden.

Bei der bevorzugten Realisierung des erfindungsgemäßen Verfahrens werden in der Datenverarbeitungseinheit Algorithmen verwendet, die entweder eine Oberfläche detektieren oder bewirken, daß der Datenblock als transparentes Objekt dargestellt wird. Es können auch stärkste oder schwächste Echos entlang eines Abtaststrahles zur Anzeige gebracht werden.

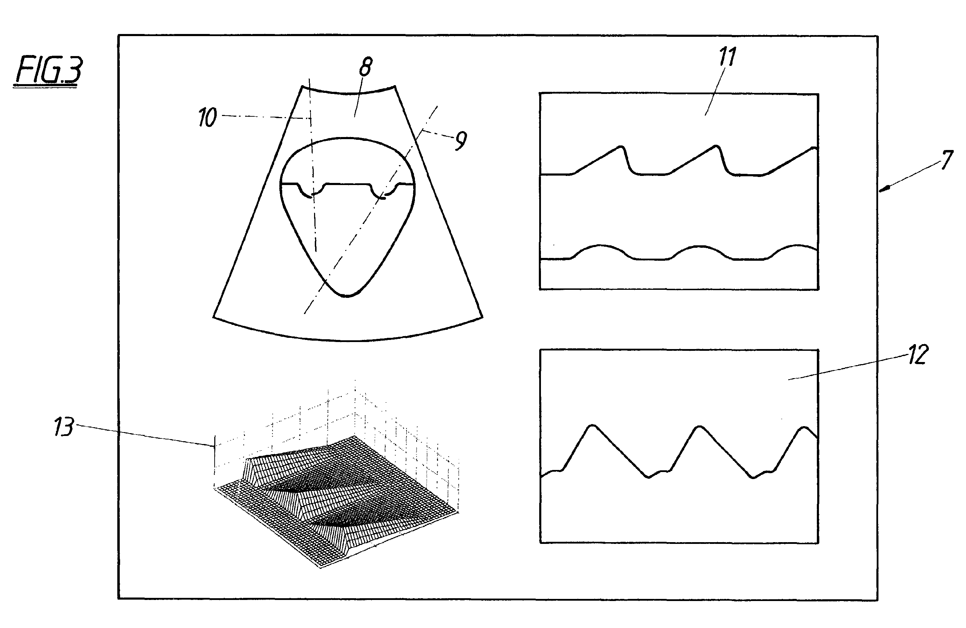

Die Anzeigeeinheit 7 ist in der bevorzugten Form ein Bildschirm (Fig. 3). Hier können die nach dem erfindungsgemäßen Verfahren nach verschiedenen Ableitungen gewonnenen Darstellungen aber auch weitere Darstellungen aus der Ultraschalluntersuchung in verschiedenen Anzeigeformaten dargestellt werden. Beim Ausführungsbeispiel wird der Bildschirm in vier Quadranten geteilt. Im ersten Quadranten wird ein bei der Abtastung durch 1 erhaltenes B-Bild dargestellt. In dieses B-Bild können Markierungen 9, 10 eingeblendet werden, welche die Lage eines Schallstrahles bei einer M-Bildabtastung repräsentieren. Aus der Markierung 9 werden im Feld 11 zwei praktisch einem UkG der einen Herzklappe und der hinteren Herzwand entsprechende Kurvenzüge abgeleitet. Die Darstellung nach dem Feld 12 entspricht einer Ableitung nach der Markierung 10 und schließlich ist im letzten Feld 13 noch eine dreidimensionale Abbildung gemäß Fig. 2 eingeblendet.

## Patentansprüche

1. Verfahren zur Darstellung von Bewegungsabläufen bei der Untersuchung von bewegten Objekten mit Ultraschall, bei dem das Objekt mit einer Ultraschall-Schnittbildeinheit abgetastet und die erzeugten Schnittbilder in einer Speichereinheit gespeichert werden, **dadurch gekennzeichnet, daß**
- die Schnittbildeinheit auf nur eine Schnittebene eingestellt wird,
- die aus aufeinanderfolgenden Schnittbildabtastungen gewonnenen Signale zu einem virtuellen, dreidimensionalen Datenblock umgewandelt werden, bei dem sich die dritte Dimension aus einem vorgegebenen oder wählbaren Zeitabstand zwischen aufeinanderfolgend aufgenommenen Schnittbildern ergibt und
- aus dem gespeicherten Datenblock über ein oder mehrere Abfrageeinheiten nach einstellbaren Kriterien, nämlich Schnittflächen oder Schnittachsen durch diesen Datenquader oder nach Signalkriterien Daten abgefragt und auf wenigstens einer Anzeigeeinheit in Form von Schnittbildern, Bewegungskurven, einen räumlichen Eindruck erweckenden, gegebenenfalls höhen- oder tiefenversetzten bzw. axonometrisch dargestellten Kurvenscharen oder als einen dreidimensionalen Eindruck bewirkende Bilder dargestellt werden.

2. Verfahren nach Anspruch 1, **dadurch gekennzeichnet, daß** unerwünschte Signale aus für die momentane Untersuchung nicht interessierenden Bereichen des Objektes oder sonstige die Darstellung störende Signale manuell oder automatisch von der Speicherung oder Darstellung ausgeschlossen werden.

3. Verfahren nach Anspruch 1 oder 2, **dadurch gekennzeichnet, daß** auf der Anzeigeeinheit gleichzeitig eines der tatsächlich aufgenommenen Schnittbilder, wenigstens ein nach einer wählbaren Schnittfläche durch den Datenquader rekonstruiertes Schnittbild und ein einen dreidimensionalen Eindruck erwek-kendes Bild dargestellt werden und die tatsächliche Relativlage der Bilder zueinander durch Markierungen angezeigt wird.

4. Verfahren nach den Ansprüchen 1 bis 3, **dadurch gekennzeichnet, daß** für die Darstellung des den dreidimensionalen Eindruck erweckenden Bildes Signale von auswählbaren Oberflächen bzw. Reflexionsflächen des Objektes, Signale auswählbarer Stärke, z. B. die stärksten und/oder schwächsten in Datenquader gespeicherten Signale ausgewählt bzw. der Datenquader als transparentes Objekt dargestellt wird und bzw. oder Darstellungen nach Mischungen dieser Kriterien vorgenommen werden.

5. Verfahren nach einem der Ansprüche 1 bis 4, **dadurch gekennzeichnet, daß** das den dreidimensionalen Eindruck erweckende Bild als Nischenbild dargestellt wird
